# EUROPÄISCHE PATENTSCHRIFT

(11) **EP 1 339 526 B1**
(45) Veröffentlichungstag und Bekanntmachung des Hinweises auf die Patenterteilung: **01.06.2005**
(21) Anmeldenummer: 01995558.2
(22) Anmeldetag: 01.12.2001
(51) Int. Cl.: B23Q 1/48, B23Q 7/02, B23Q 7/14, B23Q 39/04, B23Q 16/10

(54) **RUNDTAKTEINRICHTUNG ZUM EINSATZ IN EINER GRUPPE VON BEARBEITUNGSSTATIONEN**
ROTARY INDEXING MACHINE FOR USE IN A GROUP OF TREATMENT STATIONS
DISPOSITIF A INDEXAGE CIRCULAIRE UTILISE DANS UN GROUPE DE POSTES DE TRAITEMENT

(30) Priorität: 09.12.2000 DE 10061524
(43) Veröffentlichungstag der Anmeldung: 03.09.2003
(73) Patentinhaber: Werkzeugmaschinenfabrik Vogtland Gmbh, 08525 Plauen (DE)
(72) Erfinder: GÜNTER, Albert, 08523 Plauen (DE)
(74) Vertreter: Hafner, Dieter, Dr. Dipl.-Phys.
(86) Internationale Anmeldenummer: PCT/DE2001/004517
(87) Internationale Veröffentlichungsnummer: WO 2002/045902

(56) Entgegenhaltungen:
- DD-A- 293 298
- DE-A- 19 620 449
- GB-A- 1 494 173
- US-A- 3 889 555
- US-A- 6 148 988
- DATABASE WPI Section PQ, Week 198747 Derwent Publications Ltd., London, GB; Class P56, AN 1987-333457 XP002195865 -& SU 1 303 377 A (ABITOTSKII V G), 15. April 1987 (1987-04-15)

## Beschreibung

Die Erfindung betrifft eine Rundtakteinrichtung zum Einsatz in einer Mehrzahl von Bearbeitungsstationen, in deren Arbeitsbereichen jeweils mindestens eine Spanneinrichtung für wechselbare Werkstückträger angeordnet ist. Eine derartige Rundtakteinrichtung ist in der deutschen Patentschrift DD 293 298 beschrieben und weist im wesentlichen eine mit einer Hub- und Dreheinrichtung versehene Rundtakteinheit auf, an welcher Trägerelemente angeordnet sind, die zur Aufnahme der Werkstückträger geeignet sind. Die Hub- und Dreheinrichtung ist dabei so ausgebildet, daß sie jeweils eine Mehrzahl von Werkstückträgem untergreifen kann, wenn sie von einer abgesenkten in eine angehobene Stellung verfahren wird. Sobald die Werkstückträger aus ihren Bearbeitungspositionen ausgehoben sind, setzt ein Drehvorgang der Dreheinrichtung ein, um die Werkstückträger in ihre neuen Bearbeitungspositionen zu verbringen. Ein nachfolgender Absetzvorgang setzt die Werkstückträger dann wieder auf den Rundtakteinrichtungen ab, die mit einer Spanneinrichtung versehen sind, welche mit den Werkstückträgern zusammenwirkt, um diese für den nachfolgenden maschinellen Bearbeitungsvorgang zu fixieren.

Die Hub- und Dreheinrichtung der Rundtakteinheit umfaßt eine Kolbenstange; beim Stand der Technik ist mit der Kolbenstange ein Getriebe verbunden, das mit einem Hydraulikzylinder zusammenwirkt, um die Drehbewegung durchzuführen. Ein derartiger Antrieb ist kompliziert, da Getriebe- und Antriebsteile der Hubbewegung folgen müssen, was zu einer Vergrößerung der bewegten Massen führt.

Eine Rundtakteinrichtung gemäß dem Oberbegriff des Anspruchs 1 ist z.B. aus der DE-A-19 620 449 bekannt.

Der Erfindung liegt die Aufgabe zugrunde, eine Rundtakteinrichtung mit den Merkmalen des Oberbegriffes des Anspruches 1 weiterzubilden. Diese Aufgabe wird durch die Merkmale des Anspruches 1 gelöst, vorteilhafte Weiterbildungen ergeben sich aus den Unteransprüchen 2-15.

Durch die Merkmale des Anspruches 1 wird zunächst erreicht, daß die Hubbewegung der Kolbenstange gleichzeitig die Kupplungsbewegung ist, durch welche die beiden übereinander liegenden insbesondere scheibenartigen Kupplungselemente miteinander in Eingriff gebracht werden. Dadurch kommt der Hubbewegung der Kolbenstange eine Doppelfunktion zu, weitere gegebenenfalls motorisch anzutreibende Bewegungsabläufe können dadurch entfallen.

In der unteren Stellung sowie während der Hubbewegung ist die Kolbenstange drehfixiert, so daß eine motorische Nachsteuerung der Drehbewegung beim Absetzvorgang der Werkstückträger auf den Spanneinrichtungen nicht notwendig ist. Vorteilhafterweise greift während der Hubbewegung mindestens ein radial äußerer Vorsprung des Kupplungselementes oder der Kolbenstange in mindestens ein ortsfest angebrachtes Führungselement ein, das unkontrollierte Verdrehbewegungen der Hub- und Dreheinrichtung verhindert. Sobald die beiden Kupplungselemente allerdings ineinander eingreifen, liegt der Führungsvorsprung außerhalb des mindestens einen Führungselementes und gestattet damit eine Verdrehbewegung, die durch die ineinander eingreifenden Kupplungsteile initiiert werden kann.

Mit besonderem Vorteil kann ein Direktantriebsmotor zum Drehantrieb der Hub- und Dreheinrichtung verwendet werden. Ein solcher Direktantriebsmotor kann mit seinen wesentlichen Elementen koaxial um das Zentrum der Rundtakteinrichtung angeordnet werden, so daß der innerhalb der Rundteiltische zur Verfügung stehende Raum gleichmäßig ausgefüllt ist. Außerdem erlaubt die Verwendung eines Direktantriebsmotors mit relativ großem Radius die Erzeugung hoher Drehmomente und damit relativ hoher Taktgeschwindigkeiten beim Umsetzen der Pallettenträger.

Die Anordnung des Direktantriebsmotors um die Mittellängsachse der Hub- und Dreheinrichtung hat außerdem den Vorteil, daß der Großteil der bewegten Massen ausbalanciert um die Mittellängsachse bewegt wird, wodurch ein vibrationsfreies Arbeiten der Rundtakteinrichtung erzielt wird. Der Rotor des Direktantriebsmotors trägt direkt das obere Kupplungselement, so daß zusätzliche Getriebeelemente entfallen können.

Das untere Ende der Kolbenstange taucht in abgesenkter Stellung in ein topfartiges Gehäuseunterteil ein, das neben einer üblichen Schutzfunktion auch insofern eine Führungsfunktion unternimmt, als das ortsfeste Führungselement in das Unterteil integriert ist. Außerdem ist es möglich, ein Linearmeßsystem in dem Gehäuseunterteil unterzubringen, das mit der Kolbenstange zusammenwirkt und dessen vertikale Verschiebung genau erfaßt.

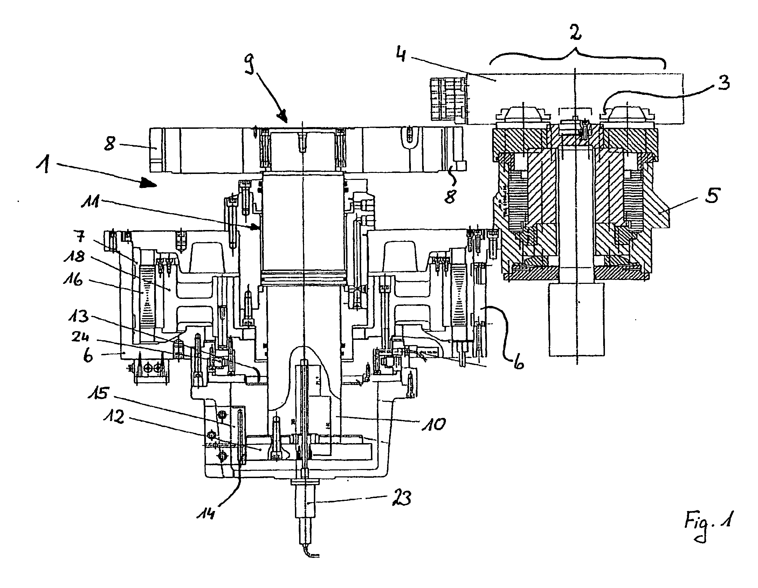

Die Erfindung ist anhand eines Ausführungsbeispiels in den Zeichnungsfiguren näher erläutert. Diese zeigen
- Fig. 1:: eine schematische (Teil-)Schnittdarstellung der Rundtakteinrichtung

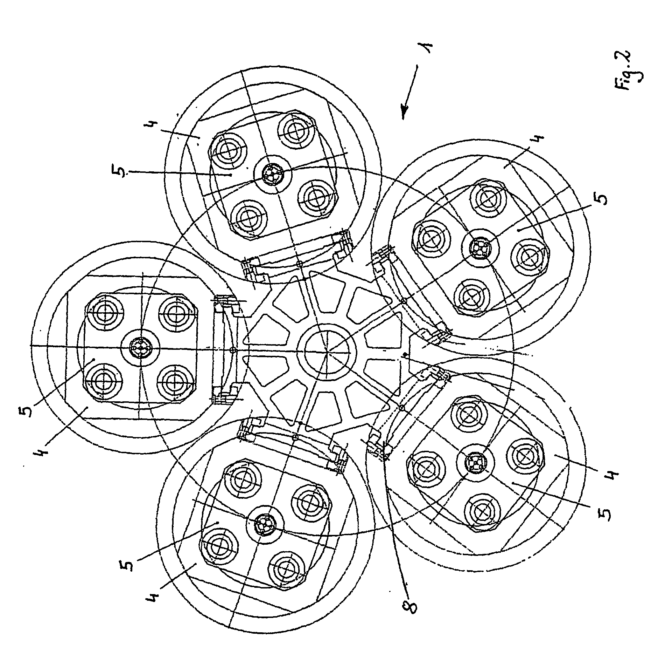

- Fig. 2:: eine schematische Draufsicht auf die Rundtakteinrichtung gemäß Fig. 1 mit fünf Rundteiltischen.

Die erfindungsgemäße Rundtakteinrichtung 1 kommt insbesondere im Zusammenhang mit Bearbeitungsstationen von Werkzeugmaschinen zum Einsatz, in deren Arbeitsbereichen 2 Spanneinrichtungen 3 für wechselbare Werkstückträger 4 angeordnet sind. Die Spanneinrichtungen 3 sind auf Rundteiltischen 5 montiert, die entweder am Gehäuse 6 der Rundtakteinrichtung 1 oder separat angeordnet sein können. Die Rundtakteinrichtung 1 ist ferner mit einer Rundtakteinheit 9 versehen, die eine Hubund Dreheinrichtung 7 mit radial abstehenden Trägerelementen 8 zur Aufnahme der Werkstückträger 4 trägt.

Die Rundtakteinheit 9 umfaßt ferner eine Kolbenstange 10, die in einer Hubzylinderanordnung 11 kippstabil gelagert ist. Am oberen Ende der Kolbenstange 10 sind die Trägerelemente 8 befestigt, am unteren Ende der Kolbenstange 10 ist drehfest ein erstes Kupplungselement 12 angeordnet, das durch die Hubbewegung der Kolbenstange 10 mit einem darüberliegenden oberen Kupplungselement 13 in Eingriff gebracht werden kann. Beide Kupplungselemente sind im wesentlichen scheibenartig ausgebildet, das obere Kupplungslement umgibt die Kolbenstange 10 und ist motorisch angetrieben. Bei der Hubbewegung gleitet die Kolbenstange 10 durch das weitere Kupplungselement 13 hindurch, bis die beiden scheibenartigen Kupplungselemente 12, 13 aneinander liegen.

Die Kolbenstange 10 und die Trägerelemente 8 sind in der abgesenkten Stellung und während der Hubbewegung der Kolbenstange 10 drehfixiert, so daß die Werkstückträger 4 mit hoher Präzision auf den Spanneinrichtungen 3 abgesetzt werden können. Die Drehfixierung wird dadurch gewährleistet, daß während der Hubbewegung der Kolbenstange 10 ein radial äußerer Vorsprung 14 an der Kolbenstange 10 oder der Kupplung eines Kupplungsträgers in mindestens ein ortsfest angebrachtes Führungselement in Form einer vertikal verlaufenden Führungsnut 15 eingreift. Bei Erreichen der oberen Kupplungseingriffstellung der beiden Kupplungselemente 12, 13 verläßt der Vorsprung 14 die Führungsnut 15, so daß die Kolbenstange 10 und die Trägerelemente 8 drehangetrieben werden können.

Dazu ist ein Direktantriebsmotor 16 vorgesehen, dessen wesentliche Elemente Stator 17 und Rotor 18 koaxial um die Hub- und Dreheinrichtung 7 herum angeordnet sind. Der Rotor 18 des Direktantriebsmotors 16 dreht sich dabei um die Mittellängsachse 19 der Hub- und Dreheinrichtung 7 und trägt direkt das weitere (obere) Kupplungselement 13.

Der Rotor 18 ist mit seinem unteren Bereich in einem Axial-Radiallager 25 kippsteif gelagert. Da die Kolbenstange 10 mit ihrem unteren Bereich in dem Rotor 18 geführt ist, ist die Rundtakteinrichtung geeignet, schwere und insbesondere auch ungleichmäßig verteilte Lasten zu heben.

Das untere Ende der Kolbenstange 10 taucht in abgesenkter Stellung in ein topfartiges Gehäuseunterteil 20 ein, an dessen Innenseite 21 das Führungselement in Form der Führungsnut 15 angeordnet ist.

Im Boden 22 des Gehäuseunterteils 20 ist ein Linearmeßsystem 23 angeordnet, das mit der Kolbenstange 10 zusammenwirkt und geeignet ist, in Verbindung mit einer Maschinensteuerung die Hubbewegung der Kolbenstange weg- und geschwindigkeitsabhängig zu regeln. Auch im Rotationsbereich des Rotors 18 ist ein Meßsystem 24 vorgeschen, über das die Drehbewegung der Hub- und Dreheinrichtung 7 erfaßt werden kann.

Die Hub- und Dreheinrichtung 7 sowie der Direktantriebsmotor 16 mit seinen wesentlichen Elementen sind in einem Maschinengehäuse angeordnet, an welchem peripher die Rundteiltische 5 befestigt sind. In alternativer Ausführung kann es aber auch vorgeschen sein, die Rundteiltische 5 gesondert und damit mechanisch weitgehend entkoppelt von den Rundteiltischen 5 aufzustellen.

Die an den Rundteiltischen 5 befestigten Spanneinrichtungen 3 für die Palletten sind synchron mit der Hubbewegung der Hub- und Dreheinrichtung 7 ansteuerbar, wozu die nicht näher dargestellte elektronische Maschinensteuerung vorgesehen ist, die die hydraulischen Elemente der Hub- und Dreheinrichtung 7, den Direktantriebsmotor 16 und die Spanneinrichtungen 3 ansteuert.

## Patentansprüche

1. Rundtakteinrichtung (1) zum Einsatz in einer Mehrzahl von Bearbeitungsstationen, in deren Arbeitsbereichen (2) jeweils mindestens eine Spanneinrichtung (3) für wechselbare Werkstückträger (4) angeordnet ist, wobei die Rundtakteinrichtung (1) eine mit einer Hub- und Dreheinrichtung (7) versehene Rundtakteinheit (9) aufweist, an welcher Trägerelemente (8) zur Aufnahme der Werkstückträger (4) befestigt sind, wobei die Hub- und Dreheinrichtung (7) der Rundtakteinheit (9) mit einer Kolbenstange (10) versehen ist, wobei
an der während der Hubbewegung drehfixierten Kolbenstange (10) drehfest ein erstes Kupplungselement (12) angeordnet ist, das durch die Hubbewegung der Kolbenstange (10) mit einem darüber liegenden weiteren Kupplungselement in Eingriff bringbar ist, welches motorisch angetrieben ist, **dadurch gekennzeichnet, daß** das weitere Kupplungselement (13) die Kolbenstange (10) umgibt.

2. Rundtakteinrichtung nach Anspruch 1,
**dadurch gekennzeichnet, daß**
während der Hubbewegung mindestens ein radial äußerer Vorsprung (14) des Kupplungselementes (12) oder der Kolbenstange (10) in mindestens ein ortsfest angebrachtes Führungselement (15) eingreift.

3. Rundtakteinrichtung nach Anspruch 2,
**dadurch gekennzeichnet, daß**
der Vorsprung (14) bei Erreichen der oberen Kupplungseingriffsstellung außerhalb des Führungselementes (15) liegt und damit drehbar angeordnet ist.

4. Rundtakteinrichtung nach einem der vorhergehenden Ansprüche,
**gekennzeichnet durch**
einen Direktantriebsmotor (16) zum Drehantrieb der Hub- und Dreheinrichtung (7).

5. Rundtakteinrichtung nach einem der vorhergehenden Ansprüche,
**dadurch gekennzeichnet, daß**
die wesentlichen Elemente des Direktantriebsmotors (16) koaxial um die Hubund Dreheinrichtung (7) herum angeordnet sind.

6. Rundtakteinrichtung nach einem der vorhergehenden Ansprüche,
**dadurch gekennzeichnet, daß**
sich der Rotor (18) des Direktantriebsmotors (16) um die Mittellängsachse (19) der Hub- und Dreheinrichtung (7) dreht.

7. Rundtakteinrichtung nach einem der vorhergehenden Ansprüche,
**dadurch gekennzeichnet, daß**
der Rotor (18) des Direktantriebsmotors (16) in einem Axial-Radiallager (25) kippsteif gelagert ist und die Kolbenstange (10) im Rotor (18) geführt ist.

8. Rundtakteinrichtung nach einem der vorhergehenden Ansprüche,
**dadurch gekennzeichnet, daß**
der Rotor (18) des Direktantriebsmotors (16) das weitere Kupplungselement (13) trägt.

9. Rundtakteinrichtung nach einem der vorhergehenden Ansprüche,
**dadurch gekennzeichnet, daß**
an den Trägerelementen (8) etwa T-förmig ausgebildete Mitnehmer angeordnet sind, die zum Transport der Werkstückträger (4) in korrespondierende T-förmige Ausnehmungen an den Seitenbereichen der Werkstückträger (4) eingreifen.

10. Rundtakteinrichtung nach einem der vorhergehenden Ansprüche,
**dadurch gekennzeichnet, daß**
das untere Ende der Kolbenstange (10) in abgesenkter Stellung in ein topfartiges Gehäuseunterteil (20) eintaucht.

11. Rundtakteinrichtung nach einem der vorhergehenden Ansprüche,
**dadurch gekennzeichnet, daß**
an der Innenseite (21) des topfartigen Gehäuseunterteils (20) das Führungselement (Führungsnut 15) angeordnet ist.

12. Rundtakteinrichtung nach einem der vorhergehenden Ansprüche,
**dadurch gekennzeichnet, daß**
im Boden (22) des Gehäuseunterteils (20) ein Linearmeßsystem (23) angeordnet ist, das mit der Kolbenstange (10) zusammenwirkt.

13. Rundtakteinrichtung nach einem der vorhergehenden Ansprüche,
**dadurch gekennzeichnet, daß**
im Rotationsbereich des Rotors (18) ein Meßsystem (24) vorgesehen ist, das die Drehbewegung der Hub- und Dreheinrichtung (7) erfaßt.

14. Rundtakteinrichtung nach einem der vorhergehenden Ansprüche,
**dadurch gekennzeichnet, daß**
die Hub- und Dreheinrichtung (7) sowie der Direktantriebsmotor (16) in einem Maschinengehäuse angeordnet sind, an welchem peripher Rundteiltische (5) befestigt sind.

15. Rundtakteinrichtung nach einem der vorhergehenden Ansprüche,
**dadurch gekennzeichnet, daß**
die an den Rundteiltischen (5) befestigten Spanneinrichtungen (3) synchron mit der Hubbewegung der Hub- und Dreheinrichtung (7) ansteuerbar sind.

## Claims

1. Rotary-cycle apparatus (1) for use in a plurality of processing stations, in the operating regions (2) of which at least one clamping means (3) for changeable workpiece holders (4) is respectively disposed, the rotary-cycle apparatus (1) having a rotary-cycle unit (9), which is provided with a lifting and rotating means (7), and on which are mounted carrier elements (8) for the accommodation of the workpiece holders (4), the lifting and rotating means (7) of the rotary-cycle unit (9) being provided with a piston rod (10), on which piston rod (10), which is rotatably secured during the lifting movement, a first coupling element (12) is non-rotatably disposed, which can be brought into engagement, through the lifting movement of the piston rod (10), with an additional coupling element which is situated thereabove and is driven by a motor, **characterised in that** the additional coupling element (13) surrounds the piston rod (10).

2. Rotary-cycle apparatus according to claim 1, **characterised in that**, during the lifting movement, at least one radially external projection (14) of the coupling element (12) or of the piston rod (10) engages in at least one fixedly mounted guide element (15).

3. Rotary-cycle apparatus according to claim 2, **characterised in that**, when the upper coupling engagement position is reached, the projection (14) lies outside the guide element (15) and is disposed so as to be rotatable therewith.

4. Rotary-cycle apparatus according to one of the preceding claims, **characterised by** a direct driving motor (16) for rotationally driving the lifting and rotating means (7).

5. Rotary-cycle apparatus according to one of the preceding claims, **characterised in that** the essential elements of the direct driving motor (16) are disposed coaxially around the lifting and rotating means (7).

6. Rotary-cycle apparatus according to one of the preceding claims, **characterised in that** the rotor (18) of the direct driving motor (16) rotates about the central longitudinal axis (19) of the lifting and rotating means (7).

7. Rotary-cycle apparatus according to one of the preceding claims, **characterised in that** the rotor (18) of the direct driving motor (16) is mounted in a non-pivotal manner in an axial radial bearing (25), and the piston rod (10) is guided in the rotor (18).

8. Rotary-cycle apparatus according to one of the preceding claims, **characterised in that** the rotor (18) of the direct driving motor (16) supports the additional coupling element (13).

9. Rotary-cycle apparatus according to one of the preceding claims, **characterised in that** substantially T-shaped entrainment means are disposed on the carrier elements (8) and, for the transportation of the workpiece holders (4), engage in corresponding T-shaped recesses in the side regions of the workpiece holders (4).

10. Rotary-cycle apparatus according to one of the preceding claims, **characterised in that** the lower end of the piston rod (10), in its lowered position, extends into a cup-shaped lower housing portion (20).

11. Rotary-cycle apparatus according to one of the preceding claims, **characterised in that** the guide element (guide groove 15) is disposed on the internal surface (21) of the cup-shaped lower housing portion (20).

12. Rotary-cycle apparatus according to one of the preceding claims, **characterised in that** a linear measuring system (23) is disposed in the base (22) of the lower housing portion (20) and co-operates with the piston rod (10).

13. Rotary-cycle apparatus according to one of the preceding claims, **characterised in that** a measuring system (24) is provided in the rotational region of the rotor (18) and detects the rotational movement of the lifting and rotating means (7).

14. Rotary-cycle apparatus according to one of the preceding claims, **characterised in that** the lifting and rotating means (7) as well as the direct driving motor (16) are disposed in a machine housing, on which partial round tables (5) are peripherally mounted.

15. Rotary-cycle apparatus according to one of the preceding claims, **characterised in that** the clamping means (3), which are mounted on the partial round tables (5), are actuatable in synchronism with the lifting movement of the lifting and rotating means (7).

## Revendications

1. Dispositif (1) d'indexage circulaire à utiliser dans un groupe de postes d'usinage dans les zones de travail (2) desquels est respectivement disposé au moins un équipement de serrage (3) pour des porte-pièce échangeables (4), sachant que le dispositif (1) d'indexage circulaire présente une unité (9) d'indexage circulaire pourvue d'un équipement (7) de levage et de rotation sur lequel sont fixés des éléments porteurs (8) destinés à recevoir les porte-pièce (4), sachant que l'équipement (7) de levage et de rotation de l'unité (9) d'indexage circulaire est pourvu d'une tige de piston (10), sachant qu'un premier élément (12) d'accouplement est disposé en solidarité de rotation sur la tige de piston (10) bloquée en rotation pendant le mouvement de levage, élément qui, par le mouvement de levage de la tige de piston (10), peut être amené en engagement avec un autre élément d'accouplement sus-jacent qui est entraîné par moteur, **caractérisé en ce que** l'autre élément d'accouplement (13) entoure la tige de piston (10).

2. Dispositif d'indexage circulaire selon la revendication 1, **caractérisé en ce que**, pendant le mouvement de levage, au moins une saillie radialement extérieure (14) de l'élément d'accouplement (12) ou de la tige de piston (10) s'engage dans au moins un élément de guidage (15) disposé stationnairement.

3. Dispositif d'indexage circulaire selon la revendication 2, **caractérisé en ce que** la saillie (14), à l'atteinte de la position supérieure d'engagement d'accouplement, se trouve en dehors de l'élément de guidage (15) et est donc disposée rotative.

4. Dispositif d'indexage circulaire selon l'une des revendications précédentes, **caractérisé par** un moteur d'entraînement direct (16) pour l'entraînement en rotation de l'équipement (7) de levage et de rotation.

5. Dispositif d'indexage circulaire selon l'une des revendications précédentes, **caractérisé en ce que** les principaux éléments du moteur d'entraînement direct (16) sont disposés coaxialement tout autour de l'équipement (7) de levage et de rotation.

6. Dispositif d'indexage circulaire selon l'une des revendications précédentes, **caractérisé en ce que** le rotor (18) du moteur d'entraînement direct (16) tourne autour de l'axe médian longitudinal (19) de l'équipement (7) de levage et de rotation.

7. Dispositif d'indexage circulaire selon l'une des revendications précédentes, **caractérisé en ce que** le rotor (18) du moteur d'entraînement direct (16) est monté à l'épreuve du basculement dans un roulement combiné (25), et la tige de piston (10) est guidée dans le rotor (18).

8. Dispositif d'indexage circulaire selon l'une des revendications précédentes, **caractérisé en ce que** le rotor (18) du moteur d'entraînement direct (16) porte l'autre élément d'accouplement (13).

9. Dispositif d'indexage circulaire selon l'une des revendications précédentes, **caractérisé en ce que** des entraîneurs réalisés approximativement en forme de T sont disposés sur les éléments porteurs (8), entraîneurs qui, afin de transporter les porte-pièce (4), s'engagent dans des évidements correspondants en forme de T sur les régions latérales des porte-pièce (4).

10. Dispositif d'indexage circulaire selon l'une des revendications précédentes, **caractérisé en ce que** l'extrémité inférieure de la tige de piston (10) s'enfonce, en position abaissée, dans une partie inférieure (20) de boîtier du genre pot.

11. Dispositif d'indexage circulaire selon l'une des revendications précédentes, **caractérisé en ce que** l'élément de guidage (rainure de guidage 15) est disposé sur le côté intérieur (21) de la partie inférieure (20) de boîtier du genre pot.

12. Dispositif d'indexage circulaire selon l'une des revendications précédentes, **caractérisé en ce qu'**un système de mesure linéaire (23), qui coopère avec la tige de piston (10), est disposé dans le fond (22) de la partie inférieure (20) de boîtier.

13. Dispositif d'indexage circulaire selon l'une des revendications précédentes, **caractérisé en ce qu'**un système de mesure (24), qui enregistre le mouvement de rotation de l'équipement (7) de levage et de rotation, est prévu dans la zone de rotation du rotor (18).

14. Dispositif d'indexage circulaire selon l'une des revendications précédentes, **caractérisé en ce que** l'équipement (7) de levage et de rotation ainsi que le moteur d'entraînement direct (16) sont disposés dans un carter de machine sur lequel sont fixées périphériquement des tables circulaires indexables (5).

15. Dispositif d'indexage circulaire selon l'une des revendications précédentes, **caractérisé en ce que** les équipements de serrage (3) fixés sur les tables circulaires indexables (5) peuvent être asservis en synchronisme avec le mouvement de levage de l'équipement (7) de levage et de rotation.
